# FASCICULE DE BREVET EUROPEEN

(11) **EP 0 678 896 B1**
(45) Date de publication et mention de la délivrance du brevet: **20.08.1997**
(21) Numéro de dépôt: 95400857.9
(22) Date de dépôt: 14.04.1995
(51) Int. Cl.: H01J 47/06, H01J 47/00, G01T 1/185

(54) **Dispositif d'imagerie médicale en Rayonnement ionisant X ou gamma à faible dose**
Medizinischer Bilderzeugungsvorrichtung mittels ionisierender Röntgen- oder Gamma Strahlungen niedriger Dosis
Low dose ionizing X- or gamma-ray medical imaging device

(30) Priorité: 19.04.1994 FR 9404642
(43) Date de publication de la demande: 25.10.1995
(73) Titulaire: Charpak, Georges, 75005 Paris (FR)
(72) Inventeur: Charpak, Georges, 75005 Paris (FR)
(74) Mandataire: Fréchède, Michel

(56) Documents cités:
- DE-A- 4 123 871
- US-A- 4 317 038
- NUCLEAR INSTRUMENTS & METHODS IN PHYSICS RESEARCH, SECTION - A: ACCELERATORS, SPECTROMETERS, DETECTORS AND ASSOCIATED EQUIPMENT, vol.283, no.3, 10 Novembre 1989, AMSTERDAM NL pages 431 - 435 S.E. BARU ET AL. 'Multiwire proportional chamber for a digital radiographic installation.'
- NUCLEAR INSTRUMENTS & METHODS IN PHYSICS RESEARCH, SECTION - A: ACCELERATORS, SPECTROMETERS, DETECTORS AND ASSOCIATED EQUIPMENT, vol.310, no.1/2, 1 Décembre 1991, AMSTERDAM NL pages 545 - 551 B.T.A. MCKEE ET AL. 'Data acquisition for a medical imaging MWPC detector.'

## Description

L'invention concerne un dispositif d'imagerie médicale en rayonnement ionisant, X ou gamma, à faible dose.

Dans le domaine de l'imagerie médicale en rayonnement X, un problème majeur a consisté jusqu'à ce jour en la difficulté d'absorption par les détecteurs à gaz avec une probabilité voisine de 1 du rayonnement X utilisé en imagerie médicale, sauf à prévoir des dimensions d'épaisseur de ces détecteurs suffisamment importantes, ce qui nuit d'une part à la compacité d'équipements correspondants et d'autre part à leur précision en résolution.

Dans le domaine de la cristallographie en rayonnement X, les énergies de ces rayonnements utilisés sont de l'ordre de 10 keV et le parcours moyen de ces rayonnements dans un gaz tel que le xénon dépasse plusieurs centimètres à la pression atmosphérique, ce qui rend pratiquement impossible la réalisation d'un détecteur précis de grande surface et de faible épaisseur, sauf à augmenter considérablement la pression du gaz, ce qui corrélativement impose des normes mécaniques de construction de ces détecteurs pratiquement prohibitives.

Différentes solutions ont été proposées afin de tenter de remédier aux inconvénients précédemment mentionnés.

Une première solution a consisté, par exemple, à placer la source des rayons X au centre d'une fenêtre sphérique de béryllium, laquelle limite l'entrée d'un espace gazeux absorbant les rayons X. La face arrière de l'espace gazeux, constituant espace de dérive pour des électrons engendrés dans le milieu gazeux par le rayonnement X, comprend une grille concentrique placée à une distance importante, de l'ordre de 10 cm. Le volume de l'espace de dérive est rempli d'un mélange gazeux constitué en grande partie de xénon. Une différence de potentiel est appliquée entre la fenêtre et la grille de sortie, ce qui provoque la dérive des électrons d'ionisation libérés par un faisceau du rayonnement X émis dans une direction donnée de l'espace, le long d'un rayon de la sphère. Des champs électriques appropriés peuvent permettre alors de localiser ces électrons grâce à une chambre à fils et ainsi d'obtenir une image dont la précision n'est pas altérée par l'épaisseur importante du détecteur, car la réponse de l'ensemble est indépendante de la position du point d'absorption de chaque photon X le long d'un rayon de l'espace sphérique. Pour une description de ce mode opératoire, on pourra se reporter à l'article intitulé "*Applications of proportional chambers to some problems in medicine and biology*" publié par G.CHARPAK, Nuclear Instruments and Methods 156 (1978) 1-17, North-Holland Publishing Co. - CERN, Geneva, Switzerland.

Toutefois, le mode opératoire précité ne peut être envisagé pour le domaine de l'imagerie médicale car il est alors nécessaire d'utiliser des rayons X dont l'énergie est supérieure à 25 KeV, la longueur moyenne d'absorption de ces rayons devenant prohibitive à la pression atmosphérique.

D'autres solutions ont été proposées. Parmi celles-ci, l'une d'elles consiste à utiliser des feuilles minces de métaux lourds permettant d'absorber commodément les rayons X. Toutefois, les électrons arrachés à ces feuilles par effet Compton ou photoélectrique ont un parcours moyen beaucoup plus petit que le parcours moyen d'un rayon X. En conséquence, dans le cas où l'on souhaite réaliser un détecteur localisant les rayons X ou gamma au moyen de la localisation de l'électron arraché précité, le détecteur à gaz étant par exemple placé contre la feuille de plomb, l'efficacité réelle du processus mis en oeuvre est en général comprise entre 1/1000 et 1/100.
Afin de surmonter cette difficulté, on a proposé d'attaquer les feuilles minces sous incidence rasante, ou, le cas échéant, de prévoir des structures constituées de feuilles ou tubes placés de telle façon que les électrons Compton ou photoélectriques extraits des feuilles ou des parois des tubes, pénètrent dans les espaces gazeux séparant les feuilles ou emplissant les tubes, y ionisent le gaz, les électrons d'ionisation étant alors extraits puis amenés par un champ électrique dans un espace de dérive où une chambre à fils peut les localiser. Un tel mode opératoire a été décrit notamment par les articles intitulés "*An interesting fall-out of high-energy physics techniques : the imaging of X-rays at various energies for biomedical applications*" par G.CHARPAK et F.SAULI, CERN, Geneva Switzerland, April 1976 et "*The high-density multiwire drift chambe*r" par G.CHARPAK, A.P.JEAVONS, R.J.STUBBS, CERN-Data Handling Division DD/74/31, November 1974.

Ces constructions, dont il existe des formes différentes, visent à empiler un grand nombre de feuilles minces, chacune ayant une faible efficacité d'absorption des rayons X, mais en faisant en sorte qu'une seule chambre à fils puisse localiser les électrons extraits de centaines de feuilles successives, assez minces pour laisser sortir les électrons arrachés par les rayons X.

Enfin, une deuxième solution, appliquée en radiographie médicale, a été décrite dans l'article publié par E.A.BABICHEV, S.E.BARU, V.V.GRUSEW, A.G.KHABAKHPASHEV, G.M.KOLACHEV, G.A.SAVINOV, L.I.SEKHTMAN, V.A.SIDOROV, A.I.VOLOBUEV et intitulé "*Digital Radiographic Installation for Medical Diagnostics*" - Institute of Nuclear Physics, Novosibirsk - 1989. Dans cette deuxième solution, les rayons X émis illuminant le corps d'un objet ou d'un patient à observer, sont absorbés dans un espace gazeux rempli de xénon sous pression, 3 Bars, cet espace étant limité par une fente rectiligne ménagée dans une plaque de plomb formant diaphragme et permettant d'engendrer un faisceau d'illumination en nappe. Les électrons d'ionisation produits dans cet espace gazeux par les rayons X absorbés dérivent sous l'effet d'un champ électrique vers une chambre à fils dont les fils, dans un plan parallèle à un plan contenant le faisceau d'illumination en nappe délivré par la fente, sont convergents vers la source ponctuelle d'émission des rayons X.
Il en résulte que les électrons d'ionisation provenant d'un faisceau de rayons du faisceau en nappe émis dans une direction donnée par la source sont concentrés sur un seul fil de la chambre à fils. Une électronique de comptage permet de déterminer le nombre d'impulsions sur chaque fil, ce qui permet d'obtenir une mesure de l'intensité des rayons X transmis dans chacune des directions des fils.
Les mesures obtenues ainsi étant spatialement limitées à l'intensité des rayons X du faisceau en nappe délivré par la fente, celle-ci, et la source, sont déplacées le long du corps à observer pour obtenir un balayage de l'ensemble du corps à observer.

La solution précédemment décrite comporte toutefois les inconvénients ci-après.
Pour compenser la variation de gain dans la chambre, engendrée par la divergence des fils, il est nécessaire de faire varier la distance séparant les fils d'anode de la grille ou du plan de cathode, de façon à maintenir constante l'amplification autour d'un fil.
De tels dipositifs impliquent donc une construction très soignée de la chambre et des fils divergents, la précision de détection de l'ensemble restant liée à la qualité de la construction.
En outre, les paramètres de gain étant liés à la structure du dispositif de détection, fils divergents à partir de la direction de la source d'émission des rayons X, le dispositif décrit par l'article précité permet tout au plus une mise en oeuvre adaptée pour une seule configuration déterminée de distance de la source d'émission des rayons X au corps à observer et à la chambre de détection ainsi formée. Il n'est donc pas possible d'envisager des applications ou conditions d'observation variées telles que le requièrent parfois les opérations d'observation médicale.

D'autres dispositifs ont été décrits plus particulièrement dans la littérature brevet ou spécialisée. En particulier :
- Le document DE-A-4 123 871 décrit un système de radiographie dans lequel l'électrode de détection comprend des bandes s'étendant dans la direction du faisceau d'illumination, pour former un détecteur de volume de faible épaisseur. Des détecteurs latéraux adjacents sont prévus pour les électrons secondaires. La détection de position est effectuée par le détecteur de volume, celle de l'énergie par les détecteurs latéraux et par le détecteur de volume, les détecteurs latéraux pouvant être formés par des chambres proportionnelles multifils.
- Le document US-A-4 317 038 décrit une chambre à avalanche dans laquelle une détection x,y des impacts axiaux est effectuée.
- Le document Nuclear Instruments and Methods in Physics Research, vol.310 (1991), No.1/2 1er Décembre 1991, Amsterdam NL B.T.A. Mc KEE et al, "Data acquisition for a medical imaging MWPC detector", décrit un processus de codage rapide des signaux d'une chambre à fils couplée à des convertisseurs de rayons gamma attaqués perpendiculairement au plan dans lequel sont distribués les canaux du convertisseur.
Tous ces dispositifs présentent l'inconvénient de structures complexes.

La présente invention a pour but de remédier aux inconvénients précités par la mise en oeuvre d'un dispositif d'imagerie médicale en rayonnemment ionisant, X ou gamma, à faible dose, dans lequel les fonctions d'amplification et de détection étant rendues indépendantes, des rayonnements d'énergie différents peuvent être utilisés, en l'absence de limitation importante des niveaux d'énergie de ces derniers.

Un autre objet de la présente invention est la mise en oeuvre d'un dispositif d'imagerie médicale en rayonnement ionisant, X ou gamma, dans lequel les fonctions d'amplification et de détection étant rendues indépendantes, un gain d'efficacité de détection peut être obtenu, ce qui permet de réduire en conséquence les doses de rayonnement nécessaires à l'observation complète d'un patient.

Un autre objet de la présente invention est enfin la mise en oeuvre d'un dispositif d'imagerie médicale en rayonnement ionisant, X ou gamma, dans lequel les fonctions d'amplification et de détection étant rendues indépendantes, différentes conditions d'observation, notamment de distance du rayonnement ionisant, peuvent être mises en oeuvre, ce qui confère au dispositif précité une très grande souplesse d'utilisation.

Le dispositif d'imagerie médicale en rayonnement ionisant, X ou gamma, à faible dose objet de la présente invention, comprend une source de rayonnement ionisant selon un faisceau divergent, une fente longitudinale formant diaphragme permettant de délivrer un faisceau d'illumination en nappe distribué sensiblement dans un plan contenant la fente longitudinale et permettant d'illuminer un corps à observer, un module de détection permettant de détecter le faisceau transmis par le corps à observer.
Il est remarquable en ce que le module de détection comporte une chambre à dérive et une chambre à fils remplies d'un gaz permettant d'engendrer des électrons.
Les chambres comportent, agencés dans une direction orthogonale au plan contenant la fente et le faisceau d'illumination en nappe, un espace de dérive des électrons comprenant une première électrode de cathode et une grille de multiplication proportionnelle des électrons pour engendrer des électrons multipliés et des ions correspondants. Une deuxième électrode de cathode est prévue au voisinage de la grille de multiplication proportionnelle afin de permettre d'effectuer le comptage des électrons multipliés, par l'intermédiaire des ions correspondants, le comptage étant effectué pour une pluralité de directions du faisceau d'illumination en nappe.

L'invention trouve application à l'imagerie médicale en rayonnement ionisant, X ou gamma.

Elle sera mieux comprise à la lecture de la description et à l'observation des dessins ci-après dans lesquels :
- la figure 1a représente, de manière schématique, une vue générale du dispositif d'imagerie médicale objet de la présente invention ;
- la figure 1b représente un détail de réalisation du dispositif représenté en figure 1a ;
- la figure 2 représente une première variante du module de détection utlisé pour la mise en oeuvre du dispositif d'imagerie médicale représenté en figure 1a ;
- la figure 3a représente une deuxième variante du module de détection utilisé pour la mise en oeuvre du dispositif d'imagerie médicale représenté en figure 1a ;
- la figure 3b représente, selon un plan de coupe orthogonal au plan contenant le faisceau d'illumination en rayonnement ionisant, une vue en coupe d'un détail du module de détection représenté en figure 3a ;
- les figures 3c et 3d représentent une vue de face de la figure 3b selon deux variantes de réalisation distinctes.

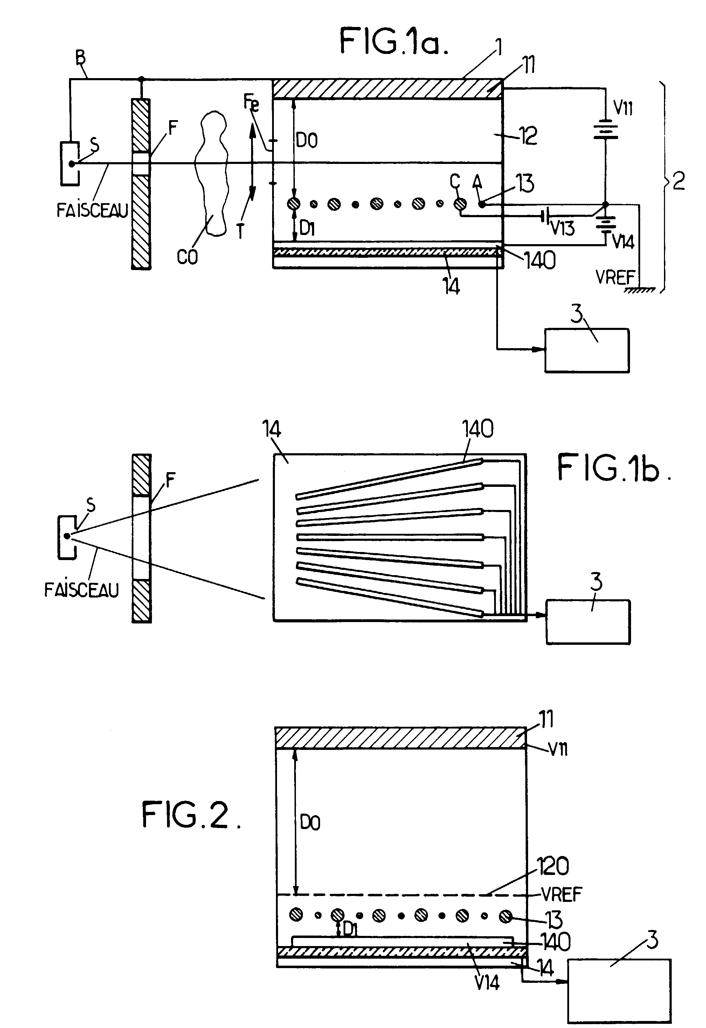

Une description plus détaillée d'un dispositif d'imagerie médicale en rayonnement ionisant, X ou gamma, à faible dose, conforme à l'objet de la présente invention, sera maintenant donnée en liaison avec la figure 1a et les figures suivantes.

Sur la figure 1a, on a représenté une vue en coupe selon un plan orthogonal à un plan contenant un faisceau d'illumination en rayonnement ionisant en nappe, le plan du faisceau d'illumination étant ainsi orthogonal au plan de la feuille sur laquelle est représentée la figure 1a.

Ainsi que représenté sur la figure précitée, on indique que le dispositif objet de la présente invention comporte une source de rayonnement ionisant, notée S, laquelle émet un faisceau de rayonnement ionisant divergent et une fente longitudinale, notée F, s'étendant orthogonalement au plan de la feuille sur laquelle est représentée la figure 1a, cette fente F formant diaphragme et permettant de délivrer un faisceau d'illumination en nappe. Ce faisceau en nappe est de manière classique distribué sensiblement dans un plan contenant la fente longitudinale F et la source S. Un module de détection 1 est prévu, ce module de détection permettant de détecter un faisceau transmis par un corps CO à observer. Ce corps CO est le corps d'un patient par exemple, lequel est illuminé par le faisceau d'illumination en nappe, le corps à observer transmettant alors un faisceau transmis de rayonnement ionisant, lequel a été soumis à des absorptions différentes en fonction de la densité du corps traversé.

Le module de détection 1 est bien entendu placé de façon à recevoir le faisceau de rayonnement ionisant transmis. De manière classique, on indique que la source S, la fente F, et le module de détection 1 peuvent être solidaires d'un bâti B, lequel peut être rendu mobile en translation et en rotation par rapport au corps à observer CO, le mouvement de translation et de rotation de l'ensemble étant symbolisé par la flèche T sur la figure 1a.

Selon un aspect particulièrement avantageux du dispositif objet de la présente invention, on indique que le module de détection 1 comporte une chambre à dérive et une chambre à fils successivement, ces chambres étant remplies d'un gaz permettant d'engendrer des électrons suite à l'illumination de ce gaz par le faisceau ionisant transmis. De manière classique, on indique que les chambres à dérive et chambre d'ionisation sont remplies d'un même gaz tel que du xénon par exemple, à une pression supérieure à la pression atmosphérique, de façon à assurer une densité de gaz adéquate.

On indique que le module de détection 1 comprend une fenêtre Fe, laquelle permet d'admettre dans l'espace de dérive de la chambre à dérive le faisceau d'illumination transmis afin d'assurer la création des électrons par interaction du rayonnement ionisant et du gaz contenu dans l'espace de dérive précité.

Selon un aspect particulièrement avantageux du dispositif objet de la présente invention, on indique que les chambres, chambre à dérive et chambre à fils formant le module de détection 1, comportent, agencé dans une direction orthogonale au plan contenant la fente F et le faisceau d'illumination en nappe, un espace de dérive des électrons, lequel est noté 12, cet espace de dérive comportant de manière classique une première électrode de cathode, notée 11. A l'espace de dérive 12 précité est également associée une grille de multiplication proportionnelle des électrons, cette grille étant notée 13, et permettant d'engendrer des électrons multipliés et des ions correspondants par un phénomène d'avalanche localisé au voisinage de la grille de multiplication proportionnelle.

En outre, la chambre à fils comporte au voisinage de la grille de multiplication proportionnelle, mais en aval de celle-ci dans le sens de dérive des électrons issus de l'espace de dérive, une deuxième électrode formant électrode de cathode pour les ions correspondants aux électrons multipliés engendrés par le phénomène d'amplification proportionnelle. Cette deuxième électrode de cathode permet d'effectuer le comptage des électrons multipliés par l'intermédiaire des signaux induits par les ions correspondants précités pour une pluralité de directions du faisceau d'illumination en nappe, ainsi qu'il sera décrit de manière plus détaillée ci-après dans la description. La deuxième électrode de cathode porte la référence 14 et la grille de multiplication proportionnelle porte la référence 13 sur la figure 1a.

D'une manière générale, on indique que la grille de multiplication proportionnelle 13, la première électrode de cathode 11 et la deuxième électrode de cathode 14 sont formées dans des plans parallèles.

En outre, et selon une caractéristique particulièrement avantageuse du dispositif objet de la présente invention, on indique que la chambre à dérive 12 et la chambre à fils délimitée par la grille de multiplication proportionnelle 13, sont formées par une chambre asymétrique, ainsi que représenté sur la figure 1a. Dans ces conditions, l'espace de dérive 12 présente dans la direction orthogonale au plan contenant la fente et le faisceau d'illumination, une dimension D0 supérieure à la distance D1 dans la même direction séparant la grille de multiplication 13 de la deuxième électrode de cathode 14.

En ce qui concerne la grille de multiplication proportionnelle 13, on indique que celle-ci peut de manière avantageuse être formée par une succession de fils rectilignes électriquement conducteurs, ces fils rectilignes étant constitués par des premiers fils de faible diamètre, notés A, et des deuxièmes fils de diamètre plus important, notés C, alternés successivement pour former la grille de multiplication proportionnelle. De manière typique, on indique que les fils de faible section A constituent des fils d'anode d'amplification et ont un diamètre compris entre 10 à 20 µm, alors que les fils de section plus importante, les fils C, constituent en fait une cathode d'amplification par rapport aux fils A et présentent un diamètre compris entre 40 et 60 µm.

En ce qui concerne la deuxième électrode de cathode 14, on comprend que celle-ci joue le rôle d'électrode de cathode vis-à-vis des ions correspondants engendrés par l'amplification proportionnelle des électrons issus de l'espace de dérive. La deuxième électrode de cathode est avantageusement formée, ainsi que représenté en figure 1b, par une pluralité de bandes électriquement conductrices, notées 140, lesquelles sont déposées sur un support électriquement isolant. Les bandes 140 ont une largeur sensiblement constante et peuvent être réalisées en technologie de circuit imprimé comme des lignes microbandes de largeur constante, de l'ordre de 0,2 mm par exemple. Les bandes 140 s'étendent selon une pluralité de directions du faisceau d'illumination et convergent vers le point d'émission du faisceau divergent d'illumination, c'est-à-dire vers la source S d'émission du rayonnement ionisant.

Ainsi qu'on l'a en outre représenté en figure 1a, on indique que la première électrode de cathode 11 est portée à un potentiel négatif, noté V11 par rapport à un potentiel de référence noté V_{REF} correspondant au potentiel de masse de l'installation. Le potentiel V11 peut par exemple être choisi égal à -10 kV.

De la même manière, on indique que la grille de multiplication proportionnelle 13 étant elle-même formée par une succession de fils électriquement conducteurs parallèles jouant le rôle successif de cathode et d'anode d'amplification alternés, les fils de cathode d'amplification, les fils C sur la figure 1a, sont portés à un potentiel négatif par rapport aux fils d'anode alors que les fils d'anode d'amplification A sont portés au potentiel de référence V_{REF}. Le potentiel des fils de cathode d'amplification C est noté V13, ce potentiel V13 pouvant être pris égal à -1 kV par exemple. Sur la figure 1a, l'ensemble des circuits électriques permettant d'engendrer les potentiels électriques V11, V13 et V14 portent la référence 2. Ces circuits de type classique ne sont pas décrits en détail.

Enfin, on indique que pour un espace de dérive présentant une dimension D0 de l'ordre de 5 mm, l'espace D1 séparant la grille de multiplication proportionnelle 13 de la deuxième électrode de cathode 14 peut être pris égal à 0,5 mm par exemple. On indique également que la distance D1 précitée correspond sensiblement à la distance séparant un fil de cathode d'amplification C d'un fil d'anode d'amplification A.

La deuxième électrode de cathode 14 et, en particulier, les bandes électriquement conductrices 140 constitutives de celle-ci sont portées à un potentiel V14, lequel est négatif par rapport à la tension de référence V_{REF}. Le potentiel V14 peut par exemple être pris égal à V14 = -500 volts.

Le fonctionnement du dispositif d'imagerie médicale objet de l'invention, et en particulier du module de détection 1, est le suivant :

Les électrons engendrés du fait de l'illumination du gaz contenu dans l'espace de dérive par le faisceau d'illumination transmis sont attirés dans l'espace de dérive 12 jusqu'à la grille d'amplification proportionnelle 13.

La grille d'amplification proportionnelle 13 permet, en raison de sa structure et de son mode de fonctionnement, d'engendrer une amplification proportionnelle des électrons issus de l'espace de dérive 12 par un phénomène d'avalanche dans le gaz contenu dans ce dernier. La grille de multiplication proportionnelle 13 permet une évacuation rapide des ions produits dans l'avalanche précitée autour d'un fil d'anode A, ce qui permet d'éviter le phénomène de paralysie des chambres de multiplication par évacuation des ions lents précités et d'obtenir ainsi un grand taux de comptage, ainsi qu'il sera décrit ci-après. On indique ainsi que le grand taux de comptage atteint permet d'augmenter la pression du gaz à l'intérieur de l'espace de dérive et de la chambre à fils jusqu'à atteindre si nécessaire une pression compatible avec la résistance mécanique de l'ensemble. La tension appliquée aux fils de cathode d'amplification C permet alors d'évacuer rapidement les ions de l'avalanche.

Les ions correspondants engendrés permettent d'induire sur les bandes électriquement conductrices 140 des implusions électriques correspondantes, lesquelles permettent alors de localiser la direction du rayonnement d'illumination ionisant transmis par le comptage des impulsions ainsi induites sur les bandes 140 précitées. Ainsi, chaque bande électriquement conductrice 140 constituant la deuxième électrode de cathode 14 est reliée à un dispositif de comptage 3 de type classique, lequel permet d'assurer le comptage des impulsions précitées.

Le problème majeur de l'élimination de l'erreur de parallaxe liée au rayons X ou gamma de direction donnée, lesquels déposent leur énergie à des profondeurs différentes d'un détecteur à gaz de grande profondeur, est ainsi supprimé.

La structure telle que représentée en figure 1a et 1b peut présenter le phénomène suivant en raison de la proximité de la deuxième électrode de cathode de la grille d'amplification proportionnelle 13, selon lequel les fils d'anode d'amplification sont attirés vers la deuxième cathode proche de 0,5 mm environ et sont ainsi susceptibles de troubler le parallélisme entre les électrodes précédemment mentionnées.

Selon un aspect particulier du dispositif objet de la présente invention et du module de détection 1, des fils isolants, par exemple en verre ou en matériau plastique, peuvent être placés tous les 2 cm le long des fils d'anode d'amplification, perpendiculairement à ceux-ci, de façon à séparer la deuxième électrode de cathode 14 des fils d'anode d'amplification A. Une telle disposition présente un inconvénient, celui de réduire périodiquement l'efficacité des fils d'anode d'amplification A précités. Cet inconvénient peut être éliminé en plaçant les fils isolants en verre ou en matériau plastique à un angle de 45° par exemple, par rapport à la direction moyenne de la source de rayons X. Ainsi, le long des fils d'anode A, il existe des zones d'inefficacité de 0,5 mm environ. Toutefois, celles-ci ne sont pas corrélées à une direction donnée du faisceau de rayons X et affectent de façon égale toutes les directions. Ceci est équivalent à une petite réduction de la profondeur de la chambre d'amplification.

Un avantage majeur du module de détection 1 précédemment décrit est en particulier qu'il n'est pas nécessaire de faire varier le champ électrique dans la chambre le long des fils, cette amplification étant de ce fait constante. En outre, lorsqu'on souhaite modifier la distance entre la source S et la fenêtre d'entrée Fe du module de détection 1, il suffit de changer le circuit constitué par la deuxième électrode de cathode 14 sans modifier aucunement les connexions électriques ou la structure mécanique de l'ensemble. Dans un tel cas, il est possible de disposer d'un jeu de deuxième électrode de cathode 14 présentant des résolutions angulaires, c'est-à-dire des distances angulaires entre les bandes électriquement conductrices 140 différentes en fonction de la distance à la source S d'émission du rayonnement ionisant.

En outre, ainsi qu'on l'a représenté en figure 2 dans un mode de réalisation particulier du module de détection 1, l'espace de dérive 12 peut en outre être muni d'une électrode auxiliaire de grille, notée 120, laquelle est transparente aux électrons engendrés et déplacés dans l'espace de dérive 12. L'électrode auxiliaire 120 est placée au voisinage de la grille d'amplification proportionnelle 13 et portée par exemple à un potentiel voisin du potentiel des fils de cathode d'amplification C. Cette électrode auxiliaire permet d'ajuster le champ électrique de l'espace de dérive et de découpler celui-ci de l'espace d'amplification proprement dit en ajustant la valeur du champ électrique dans l'espace de dérive, tout en permettant bien entendu la transmission des électrons vers la grille de multiplication proportionnelle 13.

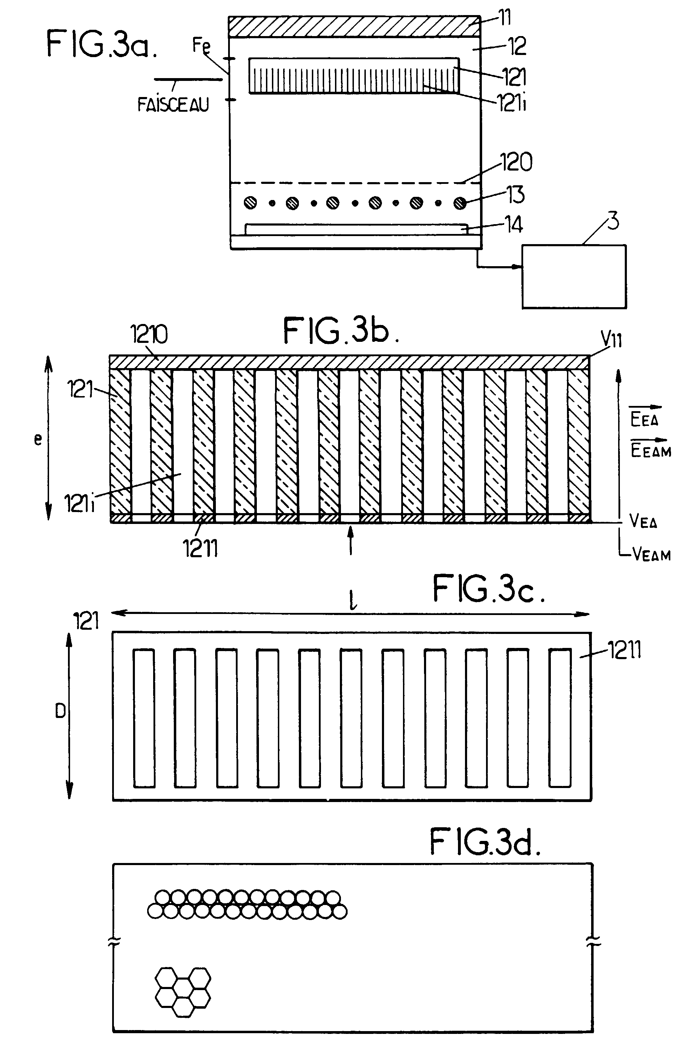

Une description plus détaillée d'une autre variante de réalisation du module de détection 1 sera maintenant donnée en liaison avec les figures 3a à 3d.

Selon une caractéristique particulièrement avantageuse du dispositif objet de la présente invention, l'espace de dérive 12 peut être muni d'un convertisseur rayons ionisants - électrons, noté 121, ce convertisseur étant constitué par une structure mécanique multicanaux.

D'une manière pratique, on indique que le convertisseur 121 précité est placé au voisinage de la fenêtre d'entrée Fe du rayonnement ionisant transmis, ainsi que représenté sur la figure 3a.

D'une manière générale, on indique que le convertisseur 121 est constitué par une structure mécanique multicanaux, chaque canal s'étendant longitudinalement dans une direction parallèle à la direction orthogonale au plan contenant la fente longitudinale F et le faisceau d'illumination en nappe, les canaux s'étendant ainsi dans la direction du champ électrique de l'espace de dérive 12. Les canaux présentent une extrémité ouverte, orientée vers la grille de multiplication proportionnelle 13 et vers la grille auxiliaire 120 lorsque celle-ci est prévue.

On indique que la structure multicanaux 121 peut être formée par des feuilles minces métalliques parallèles en un matériau tel que le plomb par exemple, d'épaisseur 5 µm, les feuilles étant distantes de 0,5 mm par exemple, et présenter une dimension ou profondeur e, ainsi que représenté en figure 3b, de plusieurs centimètres.

Les électrons arrachés à ces feuilles ou à la structure multicanaux ainsi formée, du fait du rayonnement ionisant et de l'impact de celui-ci sur les feuilles précitées, ionisent le gaz contenu entre deux feuilles successives, cet espace constituant pratiquement un canal, et les électrons d'ionisation sont extraits de l'espace grâce au champ électrique existant dans l'espace de dérive 12. Les électrons précités dérivent alors vers la chambre à fils d'amplification proportionnelle, ainsi que décrit précédemment dans la description.

Ainsi qu'on l'a représenté en outre en figure 3b, on indique que la structure 121 peut être réalisée également par un matériau en verre au plomb par exemple, la face antérieure de la structure présentant une métallisation 1210 étant par exemple accolée sur la première électrode de cathode 11 et de ce fait portée au potentiel V11 précédemment mentionné dans la description.

Dans ce cas, on forme en surface des tubes une couche de plomb très mince et très résistive, de façon que le potentiel électrique se répartisse le long des parois du tube en engendrant un champ électrique parallèle au tube.

Sur la face postérieure présentant l'ouverture des canaux, une couche métallique 1211 peut être prévue, laquelle peut être portée à un potentiel électrique, noté V_{EA}, ce potentiel permettant d'extraire les électrons des canaux 121i ménagés dans la structure mécanique 121. Le potentiel électrique peut être un potentiel électrique plus important, noté V_{EAM}, permettant non seulement l'extraction des électrons mais également leur multiplication par phénomène d'avalanche afin de produire un gain d'amplification plus important au niveau de la grille de multiplication 13. Le potentiel électrique d'extraction et de multiplication V_{EAM} peut par exemple être pris égal à quelques centaines de volts par rapport au potentiel V11 précédemment cité.

De manière typique, on indique que les potentiels d'extraction V_{EA} respectivement d'extraction et de multiplication par avalanche V_{EAM} peuvent être choisis de façon à créer des champs électriques E_{EA}, E_{EAM} correspondants d'amplitude 100 V/mm respectivement 1000 V/mm. Les champs électriques correspondants parallèles aux feuilles, peuvent être engendrés au moyen des dispositifs décrits dans les articles relatifs à l'art antérieur précédemment mentionnés dans la description.

Sur la figure 3c, on a représenté une vue de face symbolisée par la flèche de la figure 3b, chacun des canaux 121i étant ménagé entre deux feuilles successives. En ce qui concerne la dimension D de la structure mécanique 121, on indique que celle-ci correspond sensiblement à l'ouverture de la fenêtre Fe dans le plan contenant le faisceau en nappe ou le faisceau d'illumination transmis.

On indique également que, ainsi que représenté en figure 3c selon une vue de face de la figure 3b, la structure multicanal 121 peut avoir une structure en forme de nid d'abeille pour augmenter l'efficacité de l'ensemble. Dans un tel cas, la structure mécanique 121 peut être réalisée au moyen de petits tubes de verre minces d'un diamètre de l'ordre de 80 µm par exemple. En ce qui concerne la couche électriquement conductrice 1211, on indique que celle-ci peut être réalisée par une surface semi-conductrice par exemple afin de permettre d'établir le champ électrique permettant l'extraction et/ou la multiplication des électrons dans chaque canal 121i.

D'une manière générale, on indique que la dimension e de la structure mécanique 121 peut être prise égale à celle de la fente F, c'est-à-dire de l'ordre de 1 mm, ce qui permet bien entendu de faciliter l'extraction des électrons engendrés dans la structure multicanaux ainsi réalisée.

On a ainsi décrit un dispositif d'imagerie médicale en rayonnement ionisant à faible dose particulièrement avantageux par rapport aux détecteurs à gaz constitués d'un espace de dérive dans la mesure où, en raison de la dissociation des processus d'amplification proprement dite par une amplification proportionnelle au moyen d'une chambre à fils et de détection, ce dispositif est parfaitement adapté à l'imagerie médicale en rayonnement X de grande énergie ou de rayons gamma, ces rayons demandant normalement une grande longueur de xénon sous haute pression afin de permettre une absorption autorisant la détection de ces derniers.

En particulier, le dispositif d'imagerie médicale objet de la présente invention, permet une très grande souplesse d'utilisation dans la mesure où grâce à ses caractéristiques intrinsèques, celui-ci peut être utilisé facilement pour différentes distances d'observation par rapport à la source d'émission du rayonnement ionisant par un simple changement de l'électrode de deuxième cathode.

## Revendications

1. Dispositif d'imagerie médicale en rayonnement ionisant X ou gamma à faible dose, comportant une source (S) de rayonnement ionisant selon un faisceau divergent, une fente longitudinale (F) formant diaphragme permettant de délivrer un faisceau d'illumination en nappe distribué sensiblement dans un plan contenant la fente longitudinale et des moyens (1) de détection d'un faisceau transmis par un corps à observer illuminé par le faisceau d'illumination en nappe, lesdits moyens de détection (1) comportant une chambre à dérive et une chambre à fils remplies d'un gaz permettant d'engendrer les électrons, caractérisé en ce que lesdites chambres comportent, agencés dans une direction orthogonale au plan contenant la fente (F) et le faisceau d'illumination en nappe :
- un espace de dérive des électrons (12), comportant une première électrode de cathode (11),
- une grille (13) de multiplication proportionnelle des électrons pour engendrer des électrons multipliés et des ions correspondants,
et, au voisinage de ladite grille (13) de multiplication proportionnelle,
- une deuxième électrode de cathode (14) permettant d'effectuer le comptage des électrons multipliés par l'intermédiaire des ions correspondants pour une pluralité de directions du faisceau d'illumination en nappe.

2. Dispositif selon la revendication 1, caractérisé en ce que la grille (13) de multiplication proportionnelle et la première et deuxième électrode de cathode (11,14) sont formées dans des plans parallèles.

3. Dispositif selon l'une des revendications 1 ou 2, caractérisé en ce que ladite chambre à dérive et ladite chambre à fils sont formées par une chambre asymétrique, l'espace de dérive (12) présentant, dans la direction orthogonale audit plan contenant la fente (F) et le faisceau d'illumination, une dimension supérieure à la distance, dans la même direction, séparant la grille (13) de multiplication de la deuxième électrode de cathode (14).

4. Dispositif selon l'une des revendications précédentes, caractérisé en ce que ladite deuxième électrode de cathode (14) comprend une pluralité de bandes (140) électriquement conductrices déposées sur un support électriquement isolant, lesdites bandes (140), de largeur constante, s'étendant selon une pluralité de directions du faisceau d'illumination et convergeant vers le point d'émission du faisceau divergent.

5. Dispositif selon l'une des revendications précédentes, caractérisé en ce que l'espace de dérive (12) étant ménagé entre la première électrode de cathode (11) et ladite grille (13) de multiplication proportionnelle, ladite grille (13) de multiplication proportionnelle étant elle-même formée par une succession de fils électriquement conducteurs parallèles jouant le rôle successif de cathode (C) et d'anode (A) de multiplication alternés, ladite première électrode de cathode (11) est portée à un potentiel négatif, les fils de cathode (C) de multiplication sont portés à un potentiel négatif, par rapport aux fils d'anode (A), les fils d'anode (A) de multiplication sont portés au potentiel de référence et la deuxième électrode de cathode (14) est portée à un potentiel négatif.

6. Dispositif selon l'une des revendications précédentes, caractérisé en ce que l'espace de dérive (12) comprend une électrode auxiliaire de grille (120), permettant d'ajuster le champ électrique de l'espace de dérive.

7. Dispositif selon l'une des revendications précédentes, caractérisé en ce que l'espace de dérive (12) comprend un convertisseur rayons ionisants - électrons (121) constitué par une structure mécanique multicanaux, chaque canal (121ᵢ) de la structure multicanaux s'étendant longitudinalement dans une direction parallèle à ladite direction orthogonale audit plan contenant la fente longitudinale (F) et le faisceau d'illumination en nappe et présentant une extrémité ouverte orientée vers la grille (13) de multiplication proportionnelle.

8. Dispositif selon la revendication 7, caractérisé en ce que la structure multicanaux (121) est formée par un matériau absorbant du rayonnement ionisant dans laquelle sont formés des micro-canaux parallèles (121ᵢ), la face opposée à l'extrémité ouverte de chaque canal étant fermée (1210) et comportant un revêtement électriquement conducteur porté à un potentiel déterminé pour engendrer, dans chaque canal (121ᵢ) de la structure multicanaux (121), un champ électrique permettant d'extraire les électrons et de les introduire dans l'espace de dérive (12).

9. Dispositif selon la revendication 7 ou 8, caractérisé en ce que la face (1211) de la structure mécanique (121) comportant les extrémités ouvertes des canaux est portée à un potentiel électrique permettant d'engendrer dans lesdits canaux une multiplication des électrons par avalanche électronique.

## Patentansprüche

1. Medizinische Bilderzeugungsvorrichtung mittels ionisierender Röntgen- oder Gammastrahlung niedriger Dosis, enthaltend eine Quelle (S) ionisierender Strahlung gemäß einem divergierenden Strahl, einen eine Blende bildenden Längsspalt (F), der die Abgabe eines im wesentlichen in einer den Längsspalt enthaltenden Ebene verteilten fächerförmigen Beleuchtungsstrahls erlaubt, und Mittel (1) zur Detektion eines von einem zu beobachtenden, vom fächerförmigen Beleuchtungsstrahl beleuchteten Körper durchgelassenen Strahls, wobei die Mittel (1) zur Detektion eine Driftkammer und eine Drähtekammer aufweisen, die mit einem eine Elektronenbildung erlaubenden Gas gefüllt sind, dadurch **gekennzeichnet** daß die Kammern
- einen Elektronendriftraum (12), der eine erste Kathodenelektrode (11) aufweist,
- ein Gitter (13) zur proportionalen Elektronenvervielfachung für eine Erzeugung vervielfachter Elektronen und entsprechender Ionen,
und, in der Nähe des Gitters (13) zur proportionalen Vervielfachung,
- eine zweite Kathodenelektrode (14), welche die Durchführung der Zählung der vervielfachten Elektronen vermittels entsprechender Ionen für eine Vielzahl von Richtungen des fächerförmigen Beleuchtungsstrahls erlaubt,
enthalten und zwar in einer Richtung angeordnet, die zur den Spalt (F) und den fächerförmigen Beleuchtungsstrahl enthaltenden Ebene orthogonal ist.

2. Vorrichtung nach Anspruch 1, dadurch **gekennzeichnet**, daß das Gitter (13) zur proportionalen Vervielfachung und die erste und zweite Kathodenelektrode (11, 14) in parallelen Ebenen gebildet sind.

3. Vorrichtung nach einem der Ansprüche 1 oder 2, dadurch **gekennzeichnet,** daß die Drift kammer und die Drähtekammer durch eine asymmetrische Kammer gebildet sind, wobei der Driftraum (12) in der zur den Spalt (F) und den Beleuchtungsstrahl enthaltenden Ebene orthogonalen Richtung eine größere Abmessung als der das Gitter (13) zur Vervielfachung von der zweiten Kathodenelektrode (14) trennende Zwischenraum in der gleichen Richtung aufweist.

4. Vorrichtung nach einem der vorhergehenden Ansprüche, dadurch **gekennzeichnet**, daß die zweite Kathodenelektrode (14) eine Vielzahl von elektrisch leitenden, auf einem elektrisch isolierenden Träger aufgebrachten Streifen (140) aufweist, wobei sich die Streifen (140) mit konstanter Breite entsprechend einer Vielzahl von Richtungen des Beleuchtungsstrahls erstrecken und zum Abstrahlungspunkt des divergierenden Strahls hin konvergieren.

5. Vorrichtung nach einem der vorhergehenden Ansprüche, dadurch **gekennzeichnet**, daß zwischen der ersten Kathodenelektrode (11) und dem Gitter (13) zur proportionalen Vervielfachung der Driftraum (12) vorgesehen ist, daß das Gitter (13) zur proportionalen Vervielfachung selbst durch eine Aufeinanderfolge von parallelen elektrisch leitfähigen Drähten gebildet ist, welche die aufeinanderfolgende Rolle abwechselnd von Kathode (C) und Anode (A) zur Vervielfachung spielen, daß die erste Kathodenelektrode (11) auf einem negativen Potential gehalten ist, die Drähte der Kathode (C) zur Vervielfachung auf einem negatives Potential in bezug auf die Drähte der Anode (A) gehalten sind, die Drähte der Anode (A) zur Vervielfachung auf Bezugspotential gehalten sind und die zweite Kathodenelektrode (14) auf einem negativen Potential gehalten ist.

6. Vorrichtung nach einem der vorhergehenden Ansprüche, dadurch **gekennzeichnet**, daß der Driftraum (12) eine zusätzliche Gitterelektrode (120) umfaßt, die eine Einstellung des elektrischen Feldes des Driftraumes gestattet.

7. Vorrichtung nach einem der vorhergehenden Ansprüche, dadurch **gekennzeichnet**, daß der Driftraum (12) einen durch eine mehrkanalige mechanische Struktur gebildeten Ionisationsstrahlen/Elektronen-Wandler (121) umfaßt, wobei sich jeder Kanal (121ᵢ) der mehrkanaligen Struktur der Länge nach in einer Richtung erstreckt, die zur orthogonalen Richtung gegenüber der den Längsspalt (F) und den fächerförmigen Beleuchtungsstrahl enthaltenden Ebene parallel ist, und ein offenes Ende aufweist, das zum Gitter (13) zur proportionalen Vervielfachung hin ausgerichtet ist.

8. Vorrichtung nach Anspruch 7, dadurch **gekennzeichnet**, daß die mehrkanalige Struktur (121) durch ein die ionisierende Strahlung absorbierendes Material gebildet ist und in ihr parallele Mikrokanäle (121ᵢ) ausgebildet sind, wobei die zum offenen Ende jedes Kanals abgewandt liegende Seite geschlossen ist (1210) und eine elektrisch leitfähige Verkleidung enthält, die auf einem festgelegten Potential gehalten ist, um in jedem Kanal (121ᵢ) der mehrkanaligen Struktur (121) ein elektrisches Feld zu erzeugen, das ein Herausziehen der Elektronen und deren Einführung in den Driftraum (12) erlaubt.

9. Vorrichtung nach einem der Ansprüche 7 oder 8, dadurch **gekennzeichnet**, daß die die offenen Enden der Kanäle enthaltende Seite (1211) der mechanischen Struktur (121) auf einem elektrischen Potential gehalten ist, das die Erzeugung einer Elektronenvervielfachung in den Kanälen durch elektronische Lawinen erlaubt.

## Claims

1. Medical imaging device using a low-dose, X- or gamma ionizing radiation, comprising a source (S) of ionizing radiation in a divergent beam, a longitudinal slit (F) forming a diaphragm, making it possible to deliver a sheet-form illumination beam, distributed substantially in a plane containing the longitudinal slit and means (1) for detecting a beam transmitted by a body to be observed, illuminated by the sheet-form illumination beam, the said detection means (1) comprising a drift chamber and a multiwire chamber which are filled with a gas making it possible to generate electrons, characterized by the said chambers comprising, arranged in a direction orthogonal to the plane containing the slit (F) and the sheet-form illumination beam :
- a drift space (12) for the electrons, comprising a first cathode electrode,
- an electron proportional multiplier grid (13) for generating multiplied electrons and corresponding ions,
and, in the vicinity of the said proportional multiplier grid (13),
- a second cathode electrode (14) making it possible to count the multiplied electrons by means of the corresponding ions for a plurality of directions of the sheet-form illumination beam.

2. Device according to Claim 1, characterized in that the proportional multiplier grid (13) and the first and second cathode electrodes (11,14) are formed in parallel planes.

3. Device according to one of Claims 1 or 2, characterized in that the said drift chamber and the said multiwire chamber are formed by an asymmetric chamber, the drift space (12) having, in the direction orthogonal to the said plane containing the slit (F) and the illumination beam, a dimension greater than the distance, in the same direction, separating the multiplier grid (13) from the second cathode electrode (14).

4. Device according to one of the preceding claims, characterized in that the said second cathode electrode (14) comprises a plurality of electrically conductive strips (140) deposited on an electrically insulating support, the said strips (140), of constant width, extending along a plurality of directions of the illumination beam and converging towards the point of emission of the divergent beam.

5. Device according to one of the preceding claims, characterized in that, the drift space (12) being arranged between the first cathode electrode (11) and the said proportional multiplier grid (13), the said proportional multiplier grid (13) being itself formed by a succession of parallel electrically conductive wires fulfilling the successive functions of alternate multiplier cathodes (C) and anodes (A), a negative potential is applied to the first said cathode electrode (11), a negative potential, with respect to the anode wires (A), is applied to the multiplier cathode wires (C), the reference potential is applied to the multiplier anode wires (A) and a negative potential is applied to the second cathode electrode (14).

6. Device according to one of the preceding claims, characterized in that the drift space (12) comprises an auxiliary grid electrode (120), making it possible to adjust the electric field in said drift space.

7. Device according to one of the preceding claims, characterized in that the drift space (12) comprises an ionizing-ray/electron converter (121) consisting of a multichannel mechanical structure, each channel (121ᵢ) in the multichannel structure extending longitudinally in a direction parallel to the said direction orthogonal to the said plane containing the longitudinal slit (F) and the sheet-form illumination beam and having an open end directed towards the proportional multiplier grid (13).

8. Device according to Claim 7, characterized in that the multichannel structure (121) is formed by a material which absorbs the ionizing radiation, in which parallel microchannels (121ᵢ) are formed, the face opposite the open end of each channel being closed (1210) and comprising an electrically conductive coating to which a defined potential is applied in order to generate, in each channel (121ᵢ) of the multichannel structure (121), an electric field making it possible to extract the electrons and introduce them into the drift space (12).

9. Device according to Claim 7 or 8, characterized in that an electric potential is applied to the face (1211) of the mechanical structure (121) comprising the open ends of the channels, making it possible to generate multiplication of the electrons by electron avalanche in the said channels.
